# FASCICULE DE BREVET EUROPEEN

(11) **EP 2 839 057 B1**
(45) Date de publication et mention de la délivrance du brevet: **17.10.2018**
(21) Numéro de dépôt: 12722776.7
(22) Date de dépôt: 17.04.2012
(51) Int. Cl.: C23F 13/02, C23F 13/06, C04B 41/00, C04B 41/72, C04B 41/53, E04C 5/01

(54) **PROCEDE DE PROTECTION GALVANIQUE D'UNE STRUCTURE EN BETON ARME**
VERFAHREN ZUM GALVANISCHEN SCHUTZ EINER VERSTÄRKTEN BETONSTRUKTUR
METHOD FOR THE GALVANIC PROTECTION OF A REINFORCED CONCRETE STRUCTURE

(43) Date de publication de la demande: 25.02.2015
(73) Titulaire: SOLETANCHE FREYSSINET, 92500 Rueil Malmaison (FR)
(72) Inventeur: TOURNEUR, Christian, F-78320 Le Mesnil Saint Denis (FR)
(74) Mandataire: Cabinet Plasseraud
(86) Numéro de dépôt international: PCT/FR2012/050834
(87) Numéro de publication internationale: WO 2013/156691

(56) Documents cités:
- WO-A1-01/07683
- WO-A1-99/41427
- WO-A2-2006/097770
- GB-A- 2 271 123
- US-A- 5 968 339
- US-A1- 2003 173 231
- US-A1- 2008 230 398
- US-A1- 2010 044 218
- US-A1- 2011 031 132
- US-B1- 6 419 816
- US-B2- 8 636 887
- GLASS G K ET AL: "On the current density required to protect steel in atmospherically exposed concrete structures", CORROSION SCIENCE, OXFORD, GB, vol. 37, no. 10, 1 octobre 1995 (1995-10-01), pages 1643-1646, XP002334572, ISSN: 0010-938X, DOI: 10.1016/0010-938X(95)00116-2
- PAGE C L ET AL: "Developments in Cathodic Protection Applied to Reinforced Concrete", JOURNAL OF MATERIALS IN CIVIL ENGINEERING, ISION, US, vol. 12, no. 1, 1 February 2000 (2000-02-01), pages 8-15, XP009147654, ISSN: 0899-1561

## Description

La présente invention concerne les techniques du béton armé, et plus particulièrement un procédé de protection des armatures du béton contre la corrosion.

Les armatures en acier du béton armé se corrodent à cause d'une diminution du pH du béton qui les enrobe en cas de carbonatation, et/ou à cause d'une pénétration par diffusion de produits polluants tels que des chlorures par exemple. Ces phénomènes qui provoquent la corrosion peuvent se produire même en présence d'un taux d'humidité faible.

Pour remettre les armatures dans un milieu immunitaire qui les protège, une méthode traditionnelle consiste à gratter le béton de recouvrement pour le remplacer par un béton sain. Mais ce procédé est cher.

Pour protéger les armatures dans leur milieu d'origine, on peut utiliser des techniques qui relèvent du domaine de la chimie, comme l'application de produits inhibiteurs, ou du domaine de l'électrochimie, comme des procédés de protection cathodique ou galvanique.

Les inhibiteurs de corrosion sont des produits liquides qui, appliqués en surface du béton, migrent par diffusion à travers celui-ci pour se fixer sur les armatures. Ils inhibent les réactions cathodiques ou anodiques ou, pour certains produits, les deux en même temps (inhibiteurs mixtes). Ce procédé a un caractère aléatoire dû à la difficulté de prévoir la diffusion des molécules dans les réseaux poreux du béton. Certains bétons ne permettent pas la pénétration des inhibiteurs.

La protection cathodique consiste à créer une anode en positionnant un métal peu corrodable à proximité des armatures en laissant une épaisseur de béton entre ce métal peu corrodable et les armatures. On branche un générateur de courant avec son pôle positif connecté à l'anode et son pôle négatif aux armatures, pour faire circuler dans le béton servant d'électrolyte un courant supérieur au courant de corrosion des armatures. Les armatures jouent alors un rôle de cathode dans le système électrolytique.

Le courant imposé au système est réglable depuis le générateur suivant le besoin. Typiquement, les courants sont réglés entre 2 mA et 20 mA par m² d'armature.

La protection cathodique galvanique est basée sur un principe similaire à la protection cathodique, mais le courant fourni résulte de la corrosion de l'anode elle même reliée aux armatures. On parle alors d'anode sacrificielle. Les anodes sont réalisées dans un métal facilement oxydable comme le zinc, l'aluminium, le magnésium ou des alliages. Le système fonctionne comme une pile. La quantité de courant débitée par un tel système dépend des surfaces d'anode et de leur composition. Le courant fourni est limité par la vitesse de corrosion des anodes sacrificielles, leur composition et leur nombre.

L'absence de générateur et de système de régulation des quantités de courant est un avantage de la protection cathodique galvanique. Cependant les courants générés par la corrosion des anodes sacrificielles restent modestes et limitent le système dans ses applications. En général, ils ne dépassent pas 2 mA par m² d'armature une fois le couplage avec l'acier effectué. Cette valeur est souvent considérée comme insuffisante pour la protection d'armatures atteintes de corrosion par piqures dans un béton chloré.

La quantité de courant galvanique ne pouvant pas être augmentée, une solution consiste à réduire le taux de chlorures au voisinage des aciers pour supprimer ou diminuer les effets de la corrosion par piqûres.

Un procédé connu consiste à appliquer sur la surface du béton une anode métallique que l'on noie dans une matrice fibreuse imbibée d'un électrolyte pour assurer une continuité électrique entre l'anode et le béton. Le pôle positif d'un générateur est branché sur l'anode et le pôle négatif aux armatures pour appliquer un courant de forte intensité (environ 1 A/m² d'armature) pendant 200 heures environ. Les ions négatifs Cl⁻ sont alors attirés par la polarité positive de l'anode et migrent vers l'extérieur pour se concentrer autour de l'anode. À la fin du traitement, l'anode et la matrice imbibée d'électrolyte sont retirées avec les ions chlorure extraits. Les armatures en acier se retrouvent dans un milieu décontaminé des ions agressifs, et peuvent alors être protégées pour le futur par une protection galvanique dont les courants sont suffisants pour un milieu non chloré.

De tels procédés d'extraction de chlorures sont d'une mise en oeuvre longue et coûteuse. De ce fait, ils ne sont pas utilisés dans ce contexte.

Les demandes de brevet WO 2005/106076 A2 et WO 2006/097770 A2 décrivent une solution intermédiaire qui permet d'éloigner les ions Cl⁻ des armatures dans un système de protection galvanique. Le procédé utilise les anodes sacrificielles définitives installées dans le béton pour, dans un premier temps, appliquer un courant imposé d'une quantité de 50 kilocoulombs (kC) au moyen d'un générateur. Ce courant éloigne les ions Cl⁻ des armatures en les concentrant autour de l'anode. Le générateur peut alors être débranché et les anodes sacrificielles connectées aux armatures. L'objectif d'utiliser un faible courant galvanique pour protéger un acier de la corrosion dans un milieu déchloré est atteint. Les chlorures restant et ceux susceptibles d'entrer ultérieurement continueront à se concentrer autour de l'anode durant la période de fonctionnement du système galvanique. Mais un effet secondaire négatif est que le courant appliqué dans la première phase accélère la corrosion de l'anode qui perd du poids rapidement et donc diminue la réserve énergétique nécessaire pour la tenue dans le temps de système de protection galvanique. Il faut compenser cette perte par un poids supplémentaire d'anode au départ. La demande de brevet US 2008/0230398 décrit la succession d'un traitement temporaire de décontamination et d'un procédé de protection galvanique utilisant la même anode.

Il existe donc un besoin d'amélioration des techniques de protection galvanique en milieu chloré. Il est notamment souhaitable de disposer d'une technique permettant d'attirer les ions chlorure à distance des armatures en acier sans consommer la matière des anodes sacrificielles et/ou de remonter la valeur du pH au voisinage des aciers de façon à réduire le rapport Cl⁻/OH⁻ (réalcaliniser).

Il est proposé un procédé de protection galvanique d'une structure en béton ayant des armatures métallique selon la revendication 1. Ce procédé comprend:
- percer des trous dans la structure;
- engager une électrode de décontamination et un électrolyte dans au moins un des trous;
- connecter électriquement la borne négative d'une source de courant aux armatures et la borne positive de la source de courant à chaque électrode de décontamination;
- activer la source de courant;
- retirer l'électrolyte et chaque électrode de décontamination;
- disposer et sceller des anodes sacrificielles dans les trous percés dans la structure; et
- connecter électriquement les anodes sacrificielles aux armatures.

Une phase de décontamination est effectuée avant de disposer les anodes sacrificielles. Dans cette phase de décontamination, les ions chlorure sont attirés vers les trous où se trouvent les électrodes de décontamination et l'électrolyte. Après activation de la source de courant pendant un temps suffisant, les électrodes décontamination sont enlevées de même que l'électrolyte, ce qui évacue la majorité des ions chlorure hors de la structure. Ensuite, les anodes sacrificielles sont installées et scellées dans les trous pour assurer une protection galvanique dans un milieu à faible teneur en chlore.

La phase de décontamination est réalisée à très faible coût additionnel car elle utilise les trous déjà forés pour recevoir les anodes sacrificielles.

En outre, en utilisant des anodes-outils comme électrodes de décontamination, on évite d'entamer la masse des anodes définitives qui seront scellées pour assurer la protection galvanique. Les anodes-outils sont réutilisables à d'autres endroits de l'ouvrage à traiter, ou sur d'autres chantiers.

L'électrode de décontamination est avantageusement en matériau inoxydable, par exemple métallique (titane, acier inoxydable), ou encore en carbone. Elle offre une surface extérieure relativement importante pour la conduction du courant, ce qui notamment peut être réalisé en lui donnant une forme de tube ou de fil enroulé en spirale.

L'électrolyte est une matière choisie pour être retenue à l'intérieur des trous puis retirée de manière assez simple en appliquant un courant d'eau ou un d'air comprimé ou aspiré. Il est typiquement réalisé sous forme d'un gel électrolytique dont la consistance lui permet d'être maintenu par lui-même dans les trous dont le diamètre ne dépasse pas 25 mm, typiquement. Pour d'autres formes d'anodes, le diamètre du trou peut être augmenté ou réduit.

La profondeur des trous correspond en général à la profondeur nécessaire pour loger et positionner correctement par rapport à la surface les anodes définitives, mais il est possible pour extraire des ions chlorure plus profondément durant étape de courant imposé de faire des trous de plus grande profondeur qui seront, après enlèvement du gel et lavage, comblés par un mortier hydraulique au moment du scellement des anodes galvaniques.

D'autres particularités et avantages de la présente invention apparaîtront dans la description ci-après d'un exemple de réalisation non limitatif, en référence aux dessins annexés, dans lesquels:
- la figure 1 et une vue en perspective d'une portion d'ouvrage en béton armé à laquelle l'invention peut être appliquée;
- les figures 2 et 3 sont d'autres vues en perspective de la portion d'ouvrage de la figure 1, à deux étapes d'une phase de décontamination;
- la figure 4 est un schéma en perspective illustrant l'introduction d'une électrode sacrificielle pour la protection galvanique dans un trou percé dans la portion d'ouvrage des figures 1-3; et
- la figure 5 est une autre vue en perspective montrant schématiquement le système de protection galvanique mise en place sur la portion d'ouvrage.

La protection galvanique des armatures du béton armé est généralement obtenue en scellant dans des trous forés dans le béton des petites masses de métaux facilement oxydables, comme des alliages de zinc par exemple, reliées entre elles par un fil électrique isolé puis connecté aux armatures du béton en un ou plusieurs points. Les anodes sacrificielles ainsi formées se corrodent et génèrent des particules métalliques sous forme d'ions. Les électrons libérés lors de la réaction anodique sont distribués aux armatures par le fil électrique qui les relie. Le retour du courant se fait par le béton qui se comporte comme un électrolyte.

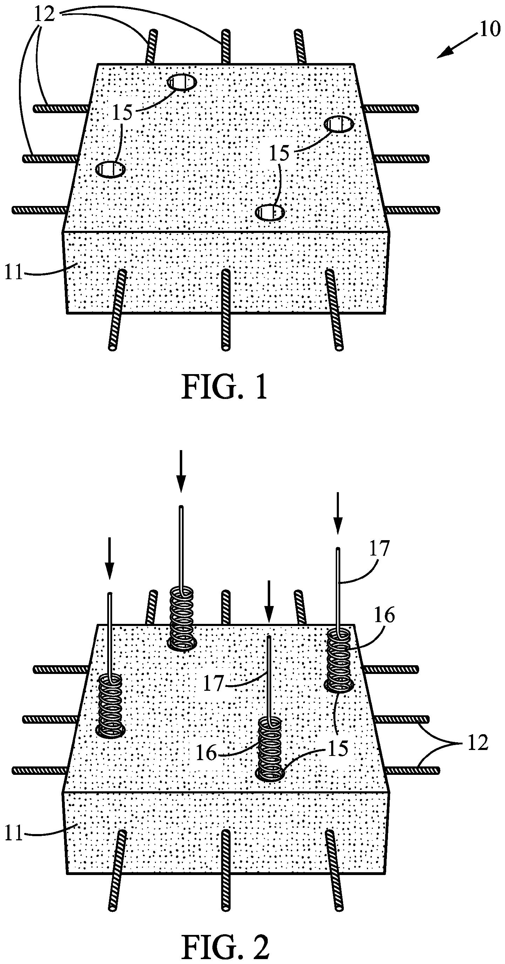

Le procédé proposé ici utilise les trous 15 forés dans le béton 11 (figure 1), destinés à sceller les masses d'alliage d'anodes galvaniques, pour pratiquer un traitement préalable par un courant imposé afin d'extraire les ions chlorures et de réalcaliniser le béton 11 autour des armatures 12.

Pour mettre en oeuvre une technique de protection galvanique, des trous 15 sont percés à travers la structure en béton armé 10, en évitant de rencontrer les armatures métalliques 12. Les trous 15 forés dans la structure sont disposés de telle sorte que les rayons d'action des électrodes sacrificielles qu'ils recevront se recouvrent, afin de couvrir la zone des armatures à protéger. Typiquement, dans la technique de protection galvanique, chaque électrode sacrificielle a un rayon d'action de l'ordre de 20 à 30 cm.

Dans le procédé selon l'invention, avant d'introduire les électrodes sacrificielles dans les trous 15, on effectue une phase préalable de décontamination à l'aide d'électrodes 16 introduites dans les trous 15 (figure 2).

Les électrodes de décontamination 16 sont réalisées de préférence en un matériau inoxydable ou faiblement oxydable. En particulier, elles peuvent être réalisées en titane, ou encore en acier inoxydable. Des matériaux non métalliques peuvent également être utilisés, comme le carbone.

Dans la réalisation illustrée par la figure 2, les électrodes de décontamination 16 sont en forme de fil métallique enroulé en spirale. D'autres géométries sont possibles. En particulier, une forme de tube est appropriée pour les électrodes de décontamination 16.

Chaque électrode de décontamination 16 est prolongée par un fil 17 également réalisé en matériau inoxydable. Dans l'exemple représenté, l'électrode 16 est constituée d'un fil de titane enroulé dans la partie plongeant dans le trou 15 et se prolongeant pour former une tige 17 à l'extérieur du trou 15.

Les électrodes 16 sont introduites dans les trous 15 avec un agent électrolytique, de préférence sous forme de gel. En pratique, les trous 15 peuvent être d'abord remplis de gel électrolytique qui, de par sa consistance gélifiée, se maintient à l'intérieur des trous. Les électrodes de décontamination 16 y sont alors introduites, de façon à occuper tout l'espace intérieur des trous 15 avec le gel électrolytique.

Le gel électrolytique peut être constitué essentiellement d'un agent de rétention d'eau et d'une base, telle que de la lessive de soude ou autre. Par exemple, pour un gel contenant 400 g d'eau, on peut y ajouter 50 g de soude (Na OH) à 30 % et 40 g de méthylcellulose de type S35. Dans les mêmes proportions, NaOH peut être remplacé par du carbonate de potassium (K₂CO₃) pour obtenir une augmentation du pH au voisinage immédiat des armatures.

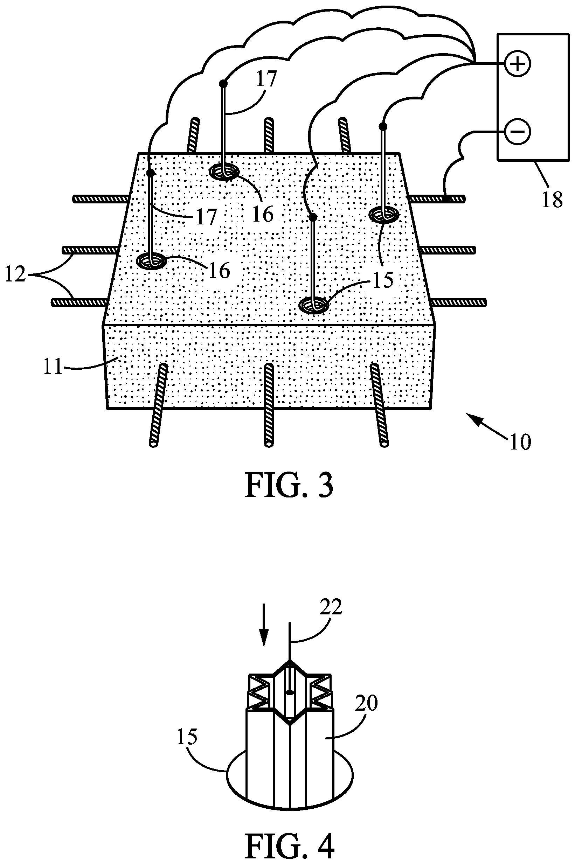

Après introduction du gel électrolytique et des électrodes 16 dans les trous 15, les électrodes 16 sont connectées électriquement entre elles et à la borne positive d'une source de courant 18 (figure 3). Quant à la borne négative de la source de courant 18, elle est reliée électriquement au réseau des armatures métalliques 12 de la structure en béton armé 10.

Après l'installation et le branchement des électrodes de décontamination 16, la phase de décontamination comporte l'activation de la source de courant 18 pour appliquer un courant qui, au bout de cette phase de décontamination, peut représenter une charge intégrée de 50 kC par m² d'armatures, par exemple, sans que cette valeur soit limitative. Le courant délivré par la source de 18 peut être compris entre 0,5 et 1 A par m² d'armatures au contact de béton, ce qui donne lieu à un temps activation de la source 18, dépendant de la surface d'armatures à protéger, de l'ordre de quelques dizaines d'heures.

Le fil 17 sert à connecter électriquement l'électrode de décontamination 16 à la borne positive de la source de courant. Sa réalisation en matériau inoxydable, sur une partie au moins de sa longueur du côté de l'électrode de décontamination, évite que l'outil que constitue l'électrode 16 de détériore lors de son utilisation.

La source de courant 18 est une batterie ou une alimentation continue reliée au secteur. Elle est activée pour délivrer un courant continu d'intensité comprise entre 0,5 et 1 A par mètre carré d'armatures.

Dans l'exemple représenté sur la figure 3, les électrodes 16 sont installées ensemble dans la structure 10 pour effectuer la phase de décontamination. On comprendra que, selon le matériel et le temps disponibles, une autre possibilité est d'introduire et mettre en service successivement une électrode 16 ou un groupe d'électrodes 16 pour décontaminer à tour de rôle plusieurs régions de l'ouvrage.

À l'issue de la phase de décontamination, les électrodes 16 sont retirées des trous 15, de même que le gel électrolytique qui contient alors une certaine quantité d'ions chlorure qui ont migré depuis la masse de béton 11.

Pour retirer le gel des trous 15, on fait circuler un courant d'eau ou un jet d'air comprimé, ou on aspire le gel.

Les trous 15 sont alors libérés et on peut y introduire les anodes sacrificielles 20 qui peuvent avoir, à titre d'illustration, une forme telle que celle représentée sur la figure 4. Dans cet exemple, les anodes sacrificielles 20 sont en forme de profilé à section en étoile, afin d'offrir une surface de contact relativement importante avec le mortier 21 qui va servir à les sceller dans les trous 15.

Les anodes sacrificielles 20 peuvent être réalisées en tout matériau connu pour son utilisation dans les techniques de protection galvanique, c'est-à-dire en un métal facilement oxydable. Le zinc ou un alliage de zinc constitue un matériau préféré pour les anodes sacrificielles 20.

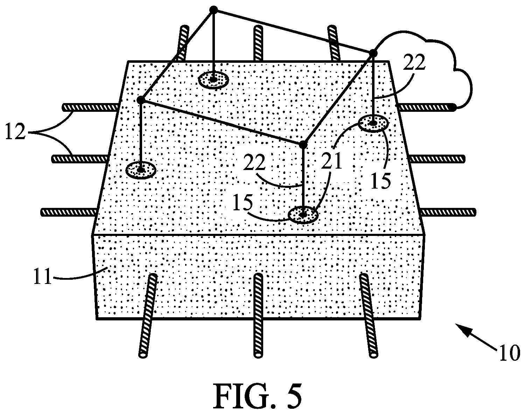

Après introduction des anodes sacrificielles 20 dans les trous 15 percés dans la structure en béton 10, ces trous 15 sont remplis de mortier de scellement 21 (figure 5). Chaque anode sacrificielle a une tige de connexion conductrice 22 qui sort du mortier de scellement 21. Ces tiges de connexion 22 sont reliées électriquement entre elles ainsi qu'au réseau d'armatures métalliques du béton, comme illustré par la figure 5.

L'installation du système de protection galvanique est alors terminée. Dans la vie future de l'ouvrage, les phénomènes électrolytiques générateurs de corrosion engendrent une consommation des anodes sacrificielles 20 plutôt qu'une attaque des armatures métalliques 12 de la structure en béton armé 10.

Le procédé proposé permet d'extraire les ions chlorure à faible coût car il utilise les trous déjà forés. Les ions chlorure sont évacués en dehors de la structure en les attirant depuis l'intérieur par des trous plutôt qu'en surface. Le temps de migration des ions peut donc être réduit.

L'utilisation d'anodes-outils réutilisables permet de ne pas endommager les masses d'anodes définitives qui sont scellées après le traitement d'extraction et de réalcalinisation.

Le procédé permet de pousser le traitement si on le désire jusqu'à l'extraction complète des ions chlorure. Par l'utilisation d'anodes-outils qui ne se consomment pas, il n'est pas limité à l'application d'une charge donnée.

Les modes de réalisation décrits ci-dessus sont des illustrations de la présente invention. Diverses modifications peuvent leur être apportées sans sortir du cadre de l'invention qui est défini par les revendications annexées.

## Revendications

1. Procédé de protection galvanique d'une structure en béton (10) ayant des armatures métalliques (12), le procédé comprenant:
- percer des trous (15) dans la structure;
- engager une première électrode (16) et un électrolyte dans au moins un des trous, la première électrode étant adaptée pour la décontamination de la structure en béton;
- connecter électriquement la borne négative d'une source de courant (18) aux armatures et la borne positive de la source de courant à chaque première électrode;
- activer la source de courant;
- retirer l'électrolyte et chaque première électrode;
- disposer et sceller des anodes sacrificielles (20), distinctes de la première électrode, dans les trous percés dans la structure; et
- connecter électriquement les anodes sacrificielles aux armatures.

2. Procédé selon la revendication 1, dans lequel la première électrode (16) est en matériau inoxydable, notamment en titane, en acier inoxydable ou en carbone.

3. Procédé selon l'une quelconque des revendications précédentes, dans lequel la première électrode (16) est en forme de tube ou de fil enroulé en spirale.

4. Procédé selon l'une quelconque des revendications précédentes, dans lequel la première électrode (16) est connectée électriquement à la borne positive de la source de courant (18) par un fil (17) réalisé en matériau inoxydable, notamment en titane, sur une partie au moins de sa longueur du côté de la première électrode.

5. Procédé selon l'une quelconque des revendications précédentes, dans lequel l'électrolyte est retiré de chaque trou (15) en appliquant un courant d'eau ou d'air.

6. Procédé selon l'une quelconque des revendications précédentes, dans lequel l'électrolyte est sous forme d'un gel.

7. Procédé selon la revendication 6, dans lequel l'électrolyte est un mélange comprenant de l'eau, un agent gélifiant ou rétenteur d'eau, tel que la méthylcellulose, et une base.

8. Procédé selon la revendication 7, dans lequel la base est de la soude.

9. Procédé selon la revendication 7, dans lequel la base est du carbonate de potassium pour réalcaliniser le béton autour des armatures (12).

10. Procédé selon l'une quelconque des revendications précédentes, dans lequel la source de courant (18) comprend une batterie ou une alimentation continue reliée au secteur activée pour délivrer un courant compris entre 0,5 et 1 A par mètre carré d'armatures.

11. Procédé selon l'une quelconque des revendications précédentes, dans lequel les anodes sacrificielles (20) sont réalisées à base de zinc

12. Procédé selon l'une quelconque des revendications précédentes, dans lequel les trous (15) ont une profondeur plus grande que celle nécessaire à la pose des anodes sacrificielles (20).

13. Procédé, comprenant une première exécution d'un procédé de protection galvanique selon l'une quelconque des revendications précédentes, suivie par une deuxième exécution d'un procédé de protection galvanique selon l'une quelconque des revendications précédentes, dans lequel un même outil est utilisé en tant que première électrode (16) dans la première exécution puis dans la deuxième exécution.

## Patentansprüche

1. Verfahren zum galvanischen Schutz einer Betonstruktur (10), die Metall Verstärkungen (12) aufweist, wobei das Verfahren aufweist:
- Bohren von Löchern (15) in die Struktur;
- Einbringen einer ersten Elektrode (16) und eines Elektrolyten in mindestens eines der Löcher, wobei die erste Elektrode zum Dekontaminieren der Betonstruktur angepasst ist;
- elektrisches Verbinden des negativen Anschlusses einer Stromquelle (18) mit den Verstärkungen und des positiven Anschlusses der Stromquelle an jede erste Elektrode;
- Aktivieren der Stromquelle;
- Entfernen des Elektrolyten und jeder ersten Elektrode;
- Anordnen und Versiegeln von Opferanoden (20), die verschieden von der ersten Elektrode sind, in den in die Struktur gebohrten Löchern; und
- elektrisches Verbinden der Opferanoden mit den Verstärkungen.

2. Verfahren nach Anspruch 1, in welchem die erste Elektrode (16) aus einem nichtrostenden Material ist, insbesondere aus Titan, aus nichtrostendem Stahl oder aus Kohlenstoff.

3. Verfahren nach einem der vorstehenden Ansprüche, in welchem die erste Elektrode (16) in Form eines Rohrs oder eines spiralförmig gewickelten Drahts ist.

4. Verfahren nach einem der vorstehenden Ansprüche, in welchem die erste Elektrode (16) über einen Draht (17), der mindestens an einem Teil seiner Länge auf Seite der ersten Elektrode aus einem nichtrostenden Material, insbesondere aus Titan hergestellt ist, elektrisch mit dem positiven Anschluss der Stromquelle verbunden wird.

5. Verfahren nach einem der vorstehenden Ansprüche, in welchem der Elektrolyt unter Verwendung eines Wasserstroms oder Luftstroms aus jedem Loch (15) entfernt wird.

6. Verfahren nach einem der vorstehenden Ansprüche, in welchem der Elektrolyt in Form eines Gels ist.

7. Verfahren nach Anspruch 6, in welchem der Elektrolyt ein Gemisch ist, das Wasser, ein Gelbildungs- oder Wasserrückhaltemittel wie Methylzellulose und eine Base aufweist.

8. Verfahren nach Anspruch 7, in welchem die Base Soda ist.

9. Verfahren nach Anspruch 7, in welchem die Base Kaliumkarbonat ist, um den Beton um die Verstärkungen (12) herum zu realkalinisieren.

10. Verfahren nach einem der vorstehenden Ansprüche, in welchem die Stromquelle (18) eine Batterie oder eine ans Netz angeschlossene kontinuierliche Stromversorgung aufweist, die aktiviert wird, um einen Strom zwischen 0,5 und 1 A pro Quadratmeter Verstärkung zu liefern.

11. Verfahren nach einem der vorstehenden Ansprüche, in welchem die Opferanoden (20) auf Zinkbasis hergestellt sind.

12. Verfahren nach einem der vorstehenden Ansprüche, in welchem die Löcher (15) eine größere Tiefe haben als zum Anordnen der Opferanoden (20) notwendig wäre.

13. Verfahren, aufweisend eine erste Durchführung eines Verfahrens zum galvanischen Schutz nach einem der vorstehenden Ansprüche, gefolgt von einer zweiten Durchführung eines Verfahrens zum galvanischen Schutz nach einem der vorstehenden Ansprüche, in welchem in der ersten Durchführung, dann in der zweiten Durchführung das gleiche Werkzeug als die erste Elektrode (16) verwendet wird.

## Claims

1. Method for galvanic protection of a concrete structure (10) having metallic armatures (12), the method comprising:
- boring holes (15) in the structure;
- inserting a first electrode (16) and an electrolyte into at least one of the holes, the first electrode being adapted for the decontamination of the concrete structure;
- electrically connecting a negative terminal of a current source (18) to the armatures and the positive terminal of the current source to each first electrode;
- activating the current source;
- removing the electrolyte and each first electrode;
- arranging and sealing sacrificial anodes (20), distinct from the first electrode, in the holes bored in the structure; and
- electrically connecting the sacrificial anodes to the armatures.

2. Method according to claim 1, wherein the first electrode (16) is made of a stainless material, in particular titanium, of stainless steel or of carbon.

3. Method according to any one of the preceding claims, wherein the first electrode (16) is formed as a tube or spirally wound wire.

4. Method according to any one of the preceding claims, wherein the first electrode (16) is electrically connected to the positive terminal of the current source (18) by a wire (17) made of stainless material, in particular titanium, on at least part of its length on the side of the first electrode.

5. Method according to any one of the preceding claims, wherein the electrolyte is removed from each hole (15) by applying a stream of water or air.

6. Method according to any one of the preceding claims, wherein the electrolyte is in the form of a gel.

7. Method according to claim 6, wherein the electrolyte is a mixture comprising water, a gelifying agent or water retainer, such as methylcellulose, and a base.

8. Method according to claim 7, wherein the base is sodium hydroxide.

9. Method according to claim 7, wherein the base is potassium carbonate to re-alkalinize the concrete around the armatures (12).

10. Method according to any one of the preceding claims, wherein the current source (18) comprises a battery or DC power supply connected to the mains, activated to supply current in a range of 0.5 to 1 A per square meter of armatures.

11. Method according to any one of the preceding claims, wherein the sacrificial anodes (20) are zinc-based.

12. Method according to any one of the preceding claims, wherein the holes (15) present a greater depth than a depth required for inserting the sacrificial anodes (20).

13. Method, comprising a first execution of a method for galvanic protection according to any one of the preceding claims, followed by a second execution of a method for galvanic protection according to any one of the preceding claims, wherein a same tool is used as first electrode (16) in the first execution and in the second execution.
